(19) **Europäisches Patentamt / European Patent Office / Office européen des brevets**

(11) **EP 4 148 561 B1**

(12) # EUROPEAN PATENT SPECIFICATION

(45) Date of publication and mention
of the grant of the patent:
**16.07.2025 Bulletin 2025/29**

(21) Application number: **21800900.9**

(22) Date of filing: **28.04.2021**

(51) International Patent Classification (IPC):
***G06F 9/30*** *(2018.01)*

(52) Cooperative Patent Classification (CPC):
**G06F 9/30036; G06F 9/30043; G06F 9/30145;**
**G06F 9/30185; G06F 9/3455**

(86) International application number:
**PCT/CN2021/090676**

(87) International publication number:
**WO 2021/223645 (11.11.2021 Gazette 2021/45)**

(54) **DATA PROCESSING METHOD AND APPARATUS, AND RELATED PRODUCT**

DATENVERARBEITUNGSVERFAHREN UND -VORRICHTUNG UND ENTSPRECHENDES
PRODUKT

PROCÉDÉ ET APPAREIL DE TRAITEMENT DE DONNÉES, ET PRODUIT ASSOCIÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **08.05.2020 CN 202010383677**

(43) Date of publication of application:
**15.03.2023 Bulletin 2023/11**

(73) Proprietor: **Anhui Cambricon Information**
**Technology Co., Ltd.**
**Hefei, Anhui 231283 (CN)**

(72) Inventors:
• **MA, Xuyan**
**Hefei, Anhui 231283 (CN)**
• **WU, Jianhua**
**Hefei, Anhui 231283 (CN)**

• **LIU, Shaoli**
**Hefei, Anhui 231283 (CN)**
• **GE, Xiangxuan**
**Hefei, Anhui 231283 (CN)**
• **LIU, Hanbo**
**Hefei, Anhui 231283 (CN)**
• **ZHANG, Lei**
**Hefei, Anhui 231283 (CN)**

(74) Representative: **Huang, Liwei**
**Cäcilienstraße 12**
**40597 Düsseldorf (DE)**

(56) References cited:
**EP-A1- 2 584 460  EP-A1- 3 336 692**
**WO-A2-2014/150913  CN-A- 104 011 648**
**CN-A- 104 011 652  CN-A- 109 952 559**
**CN-A- 112 416 256  US-A1- 2010 106 944**
**US-A1- 2020 089 495**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The application claims priority to Chinese Patent Application No. 202010383677.3, filed to the China National Intellectual Property Administration on May 8, 2020 and entitled "DATA PROCESSING METHOD AND APPARATUS, AND RELATED PRODUCT".

TECHNICAL FIELD

The present invention relates to the technical field of computers, and more particularly to a data processing method for image recognition and a data processing apparatus for image recognition and related products.

BACKGROUND

With the development of artificial intelligence technology, the artificial intelligence technology has achieved a good effect in image recognition and other fields. During image recognition, (such as, difference calculation, extension, deformation, and the like) a large amount of vector data needs to be processed. However, in the related art, the processing is relatively complex, and data overhead is relatively high.

EP 3336692A1 discloses a replicate partition instruction. See Fig. 12, [0089] to [0092], by using the Pg (predicate register) and the Ps (second predicate register), wherein Ps provides element selection information indicating which of the data elements of the source vector Zs is selected element within each of the segments identified by Pg, data elements can be selected from the Zs (source vector register). For example, data elements (a, c, e) are selected from Zs and then copied into segment 0, 1, 2, so as to form Zd (result vector).

EP 2584460A1 relate to a vector processing system (100) for replicating a single element of a source vector into a plurality of elements of a result vector. The processing system comprises a replicating subsystem (102) configured to receive a replicate instruction com-prising a source vector register identifier configured to identify a source vector register (108').

SUMMARY

In view of above technical problems, it is necessary to provide a method and apparatus for data processing and related products.

The invention is set out in the appended set of claims.

According to embodiments of the present invention, vector extension and storage may be achieved according to the extension parameter in the vector extension instruction, to obtain the extended vector data, thereby simplifying processing and reducing data overhead.

Beneficial effects corresponding to the technical problems in the background may be derived according to the technical features in the claims. Additional features and aspects of the present invention will become apparent according to the detailed description of exemplary embodiments in following accompanying drawings.

BRIEF DESCRIPTION OF THE DRAWINGS

The specification and the accompanying drawings included in the specification and constituting a part of the specification cooperatively illustrate exemplary embodiments, features, and aspects of the present invention, and are used to explain the principle of the present invention.

FIG. 1 is a schematic diagram of a processor for a data processing method, according to an embodiment of the present invention.
FIG. 2 is a flow chart of a method for data processing, according to an embodiment of the present invention.
FIG. 3 is a block diagram of an apparatus for data processing, according to an embodiment of the present invention.
FIG. 4 is a structural block diagram of a board card, according to an embodiment of the present invention.

DETAILED DESCRIPTION

Technical solutions in embodiments of the present invention will be described clearly and completely hereinafter with reference to accompanying drawings in the embodiments of the present invention. Apparently, the described embodiments are some rather than all embodiments of the present invention.

It should be understood that, the terms "include/comprise" and "contain" as well as variations thereof used in the specification and claims of the present invention mean existence of described features, wholes, steps, operations, elements, and/or components, but do not exclude existence or addition of one or more other features, wholes, steps, operations, elements, components, and/or sets thereof.

It should also be understood that, terms used in the specification of the present invention are merely for describing a specific embodiment, and not intended to limit the present invention. As used in the specification and claims of the present invention, unless the context clearly indicates otherwise, the terms "a/an", "a piece of", and "the/this" in a singular form, and the like may include plural forms. It should be further understood that, the term "and/or" used in the specification and claims of the present invention refers to any combinations of one or more of items listed in association and all possible combinations, and may include these combinations.

As used in the specification and claims, the term "if" may be interpreted as "when", "once", "in response to a determination", or "in response to a case where something is detected" depending on the context. Similarly, depending on the context, the terms "if it is determined that" or "if [the condition or event described] is detected" may be interpreted as "once it is determined that", or "in response to a determination", or "once [the condition or event described] is detected", or "in response to a case where [the condition or event described] is detected.

A method for data processing according to an embodiment of the present invention may be applied to a processor. The processor may be a general-purpose processor, such as a central processing unit (CPU), or an artificial intelligence processing unit (IPU) for executing an artificial intelligence computation. The artificial intelligence computation may include a machine learning computation, a neuromorphic computation, and the like. The machine learning computation includes a neural network computation, a k-means computation, a support vector machine computation, and the like. The IPU may, for example, include any one or any combinations of a graphics processing unit (GPU), a neural-network processing unit (NPU), a digital signal processing unit (DSP), and a field-programmable gate array (FPGA). There is no restriction on specific types of the processor in the present invention.

In a possible implementation, the processor involved in the present invention may include multiple processing units. Each processing unit may separately execute various assigned tasks, such as a convolution computation task, a pooling task, a fully connected task, and the like. There is no restriction on the processing unit and the tasks executed by the processing unit in the present invention.

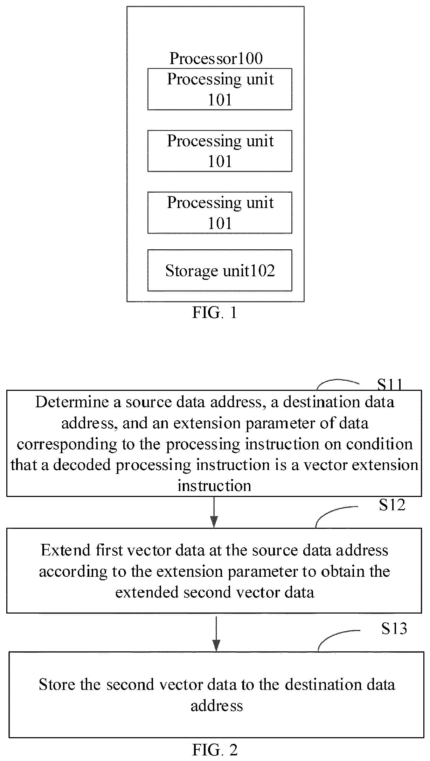

FIG. 1 is a schematic diagram of a processor for a data processing method, according to an embodiment of the present invention. As illustrated in FIG. 1, a processor 100 includes multiple processing units 101 and a storage unit 102. The multiple processing units 101 are configured to execute instruction sequences. The storage unit 102 is configured to store data, and the storage unit 102 may include a random access memory (RAM) and a register file. The multiple processing units 101 in the processor 100 may share a portion of the storage space, such as a portion of the RAM storage space and the register file, and may also have their own storage spaces.

FIG. 2 is a flow chart of a method for data processing according to an embodiment of the present invention. As illustrated in FIG. 2, the method includes:

In Step S11, determining a source data address, a destination data address, and an extension parameter for data corresponding to the processing instruction on condition that a decoded processing instruction is a vector extension instruction.

In step S12, extending first vector data at the source data address according to the extension parameter to obtain the extended second vector data.

In step S13, storing the second vector data to the destination data address, where the source data address and the destination data address include consecutive data addresses.

According to embodiments of the present invention, the extended vector data may be obtained by implementing vector extension and storage according to the extension parameter in the vector extension instruction, thereby simplifying processing and reducing data overhead.

In a possible implementation, the method may further include decoding a received processing instruction to obtain a decoded processing instruction, where the decoded processing instruction includes an operation code, and the operation code is used for indicating a performing of a vector extension processing.

For example, when the processor receives the processing instruction, the processor may decode the received processing instruction to obtain the decoded processing instruction. The decoded processing instruction includes an operation code and an operation field. The operation code is used for indicating a processing type of the processing instruction, and the operation field is used for indicating data to be processed and data parameters. If the operation code of the decoded processing instruction indicates a performing of a vector extension processing, the instruction is the vector extension instruction.

In a possible implementation, if the decoded processing instruction is the vector extension instruction, the source data address, the destination data address, and the extension parameter of the data corresponding to the processing instruction are determined in step S11. The data corresponding to the processing instruction is the first vector data indicated by the operation field of the processing instruction. The first vector data includes multiple data points. The source data address includes present data storage addresses of the multiple data points in a data storage space, which are consecutive data addresses. The destination data address represents data storage addresses for storing multiple data points of the extended second vector data, which are also consecutive data addresses. The data storage space where the source data address is located may be the same as or different from that where the destination data address is located, which is not limited in the present invention.

In a possible implementation, after determining the source data address and the extension parameter, in S12, the processor may read the multiple data points of the first vector data from the source data address, and respectively extend the read multiple data points according to the extension parameter, to obtain multiple data points of the extended second vector data, thereby realizing vector extension.

In a possible implementation, the multiple data points of the extended second vector data may be sequentially stored to the destination data address, to obtain the second vector data, thereby completing the vector extension.

Therefore, in scenarios such as image recognition, when vector data needs to be extended, an original vector may be extended to obtain a new vector according to the vector extension instruction, and then the new vector is stored in a consecutive address space, thereby simplifying processing and reducing data overhead.

In a possible implementation, step S11 may include determining a source data address of each of the multiple data points according to a source data base address and a data size of each of the multiple data points of the first vector data in an operation field of the processing instruction.

For example, the vector extension instruction may include the operation field, which is configured to indicate parameters of to be extended vector data. The operation field for example, may include a source data base address, a destination data base address, a single data point size, a single data point number, and an extension parameter.

The source data base address may represent a present base address of the multiple data points of the first vector data in the data storage space. The destination data base address may represent a base address of the multiple data points of the extended second vector data in the data storage space. The single data point size may represent a data size (such as 4 bits or 8 bits) of each data point of the first vector data and a data size of each data point of the second vector data. The single data point number may represent the count N (N is an integer greater than 1) of the data points of the first vector data. The extension parameter may indicate a manner in which the N data points of the first vector data may be extended. There is no restriction on the count of the parameters and a type of each parameter in the operation field of the vector extension instruction in the present invention.

In a possible implementation, the operation field of the vector extension instruction may include the source data base address and the single data point size. Since the source data addresses are consecutive data addresses, a source data address of each data point may be directly determined according to the data size of the data point and a serial number of the data point. A source data address of a $n^{th}$ data point may be expressed as:

$$\text{Single Point Src Addr } [n] = \text{Source Data Base Address} + n*\text{Single Point Data Size (1)}.$$

In formula (1), Single Point Src Addr [n] represents the source data address of the $n^{th}$ data point. When the source data base address is Addr1 [0, 3], and the single data point size is 4 bits, and $n$ equals 3, a source data address of a third data point is Addr1 [12, 15].

In this way, the source data address of each data point may be separately determined, so that each data point of the first vector data may be read from the source data addresses.

In a possible implementation, the first vector data includes N data points, where N is an integer greater than 1. Correspondingly, the extension parameter includes N extension parameter bits corresponding to the N data points. Step S12 may include:

Determining $k_n$ data points at a $n^{th}$ data position of the second vector data according to a $n^{th}$ data point of the first vector data and a $n^{th}$ extension parameter bit corresponding to the $n^{th}$ data point, where $1 \leq n \leq N$, and $k_n \geq 0$; determining the second vector data according to data points of N data positions of the second vector data.

For example, the extension parameter may include N extension parameter bits, which respectively represent the copied times $k_n$ of the N data points of the first vector data. For example, when N=5, the extension parameter may be expressed as [1, 2, 0, 3, 1], which may indicate that five data points are copied once, twice, zero times, three times, and once, respectively.

In a possible implementation, for the $n^{th}$ data point of the first vector data ($1 \leq n \leq N$), a $n^{th}$ extension parameter bit corresponding to the $n^{th}$ data point is $k_n$ ($k_n \geq 0$), and therefore, it may be determined that there are $k_n$ $n^{th}$ data points of the first vector data at a $n^{th}$ data position of the second vector data. Therefore, respectively extending the N data points of the first vector data may determine the data points at each of the N data positions of the second vector data. For example, the first vector data is [A, B, C, D, E], and the extension parameter may be [1, 2, 0, 3, 1], and then a second vector data [A, B, B, D, D, D, E] is obtained after extension.

It may be understood that the extension parameter may further include other extension contents (for example, enlarging or reducing a value of each data point by specific multiple times). The extension parameter may further include other representations, which may be set by those skilled in the art according to actual situations, and is not limited in the present invention.

In this way, the second extended vector data may be obtained.

In a possible implementation, step S13 may include sequentially storing data points of the second vector data according to a destination data base address and a data size of the destination data address.

For example, after the extended second vector data is obtained, the second vector data may be stored to the preset destination data address. The operation field of the vector extension instruction may include the destination data base address. A destination data address of each data point of the second vector data may be determined according to the destination data base address and a single point data size.

$$\text{Single Point Dest Addr[m]= Destination Data Base Address+m*Single Point Data Size} \quad (2).$$

In formula (2), Single Point Src Addr[m] represents a destination data address of a $m^{th}$ data point of the second vector data (the second vector data includes M data points, and $1 \leq m \leq M$, and M is an integer greater than 1). For example, when the destination data base address is Addr2 [14, 17], and the single data point size is 4 bits, and $m$ equals 3, a source data address of a third data point may be determined as Addr2 [26, 29].

In this way, the data points of the second vector data may be sequentially stored to the destination data address, thereby completing the whole process of the vector extension.

According to the data processing method of embodiments of the present invention, the vector may be extended according to the vector extension instruction, so that in application scenarios such as image recognition, when vector data needs to be extended, an original vector may be extended to be a new vector, and then the new vector is stored in a consecutive address space, thereby simplifying processing and reducing the data overhead.

It needs to be noted that, for the sake of simplicity, the foregoing method embodiments are described as a series of action combinations, however, those skilled in the art should know that the present invention is not limited by the sequence of described actions. According to the present invention, certain steps may be performed in other orders or simultaneously. Besides, those skilled in the art should know that the embodiments described in the specification are optional embodiments, and the actions and units involved are not necessarily essential to the present invention.

It needs to be further noted that although steps in the flowchart are indicated by arrows and illustrated in sequence, these steps are not necessarily executed in sequence as indicated by the arrows. Unless explicitly stated in the present invention, there are no strict restrictions on sequence on the execution of these steps, and these steps may be performed in other sequences. Further, at least a portion of the steps in the flowchart may include multiple sub-steps or multiple stages, These sub-steps or stages are not necessarily executed at the same time, but may be executed at different times, and the execution sequence of these sub-steps or stages is not necessarily sequential, but may be executed in turn or alternately with other steps or sub-steps of other steps or at least a part of stages.

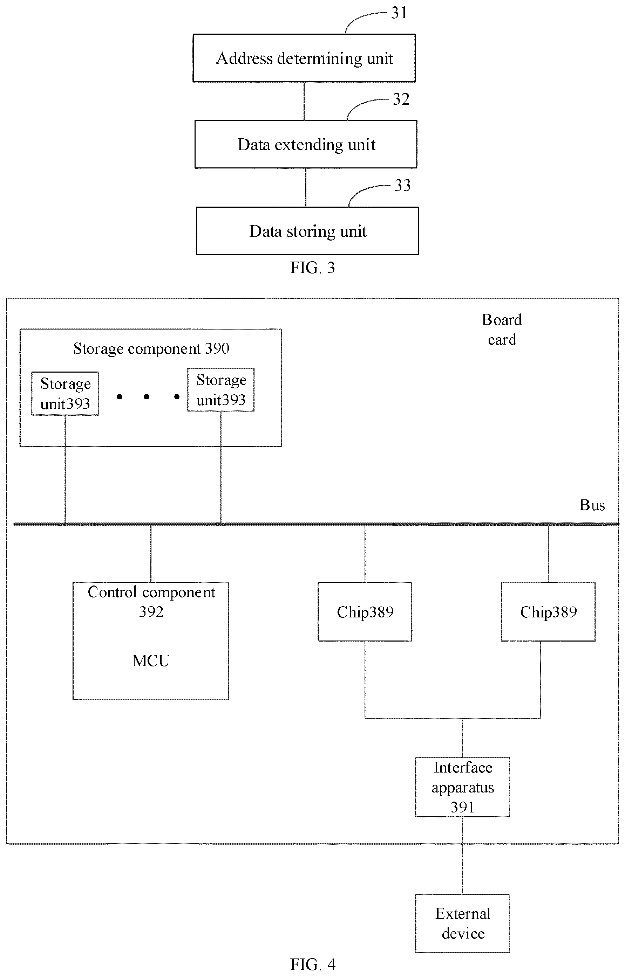

FIG. 3 is a block diagram of an apparatus for data processing according to an embodiment of the present invention. As illustrated in FIG. 3, the apparatus includes an address determining unit 31, a data extending unit 32, and a data storing unit 33.

The address determining unit 31 is configured to determine a source data address, a destination data address, and an extension parameter for data corresponding to the processing instruction, on condition that a decoded processing instruction is a vector extension instruction.

The data extending unit 32 is configured to obtain second vector data extended by extending first vector data at the source data address according to the extension parameter.

The data storing unit 33 is configured to store the second vector data to the destination data address, where the source data address and the destination data address include consecutive data addresses.

In a possible implementation, the address determining unit may include a source-address determining sub-unit.

The source-address determining sub-unit is configured to determine a source data address of the multiple data points, according to a source data base address and a data size of multiple data points of the first vector data in an operation field of the processing instruction.

In a possible implementation, the first vector data includes N data points, and the extension parameter includes N extension parameter bits corresponding to the N data points, where N is an integer greater than 1.

The data extending unit includes a data-point determining sub-unit and a data determining sub-unit.

The data-point determining sub-unit is configured to determine $k_n$ data points at a $n^{th}$ data position of the second vector data according to a $n^{th}$ data point of the first vector data and a $n^{th}$ extension parameter bit corresponding to the $n^{th}$ data point, and $1 \leq n \leq N$, and $k_n \geq 0$.

The data determining sub-unit is configured to determine the second vector data according to data points of N data positions of the second vector data.

In a possible implementation, the data storing unit includes a storing sub-unit.

The storing sub-unit is configured to store data points of the second vector data sequentially according to a destination data base address and a data size of the destination data address.

In a possible implementation, the apparatus may further include a decoding unit.

The decoding unit is configured to obtain the decoded processing instruction by decoding a received processing instruction, where the decoded processing instruction includes an operation code, and the operation code is used for indicating a performing of a vector extension processing.

It may be understood that, the apparatus embodiments described above are merely illustrative. The apparatus of the present invention may be implemented through other manners. For example, the division of the unit/module is only a logical function division, and there may be other manners of division during actual implementations. For example, multiple units, modules, or components may be combined or may be integrated into another system, or some features may be ignored or not performed.

In addition, unless otherwise specified, the functional units/modules in various embodiments of the present invention may be integrated into one unit/module, or the units/modules may be physically alone, or two or more units/modules may be integrated into one unit/module. The above-mentioned integrated unit/module may be implemented in the form of hardware or a software function unit.

If the integrated unit/module is implemented in the form of hardware, the hardware may be a digital circuitry, an analog circuitry, and the like. Physical implementation of the hardware structure includes but is not limited to transistors, memristors, and the like. Unless otherwise specified, the IPU may be any suitable hardware processor such as CPU, GPU, FPGA, DSP, ASIC (application specific integrated circuit), and the like. Unless otherwise specified, the storage unit may be any suitable magnetic storage medium or magneto-optical storage medium, for example, a resistive random access memory (RRAM), a dynamic RAM (DRAM), a static RAM (SRAM), an enhanced DRAM (EDRAM), a high-bandwidth memory (HBM), a hybrid memory cube (HMC), and the like.

The integrated unit/module may be stored in a computer-readable memory when it is implemented in the form of a software functional unit and is sold or used as a separate product. Based on such understanding, the technical solutions of the present invention essentially, or the part of the technical solutions that contributes to the related art, or all or part of the technical solutions, may be embodied in the form of a software product, which is stored in a memory and includes multiple instructions for making a computer device (which may be a personal computer, a server, or a network device and the like) to perform all or part of the steps described in the various embodiments of the present invention. The memory includes various medium capable of storing program codes, such as a universal serial bus (USB) flash disk, a read-only memory (ROM), a random access memory (RAM), a removable hard disk, a magnetic disk, or an optical disk, and the like.

In a possible implementation, an artificial intelligence chip is provided, which includes the data processing apparatus described above.

In a possible implementation, an electronic device is provided. The electronic device includes the artificial intelligence chip described above.

In a possible implementation, a board card is disclosed. The board card includes a storage component, an interface apparatus, a control component, and the artificial intelligence chip. The artificial intelligence chip is respectively connected with the storage component, the control component, and the interface apparatus. The storage component is configured to store data. The interface apparatus is configured to realize data transmission between the artificial intelligence chip and an external device. The control component is configured to monitor a state of the artificial intelligence chip.

FIG. 4 is a structural block diagram of a board card according to an embodiment of the present invention. As illustrated in FIG. 4, in addition to a chip 389, the board card may further include other support components, which include but are not limited to: a storage component 390, an interface apparatus 391, and a control component 392.

The storage component 390 is connected with the artificial intelligence chip via a bus and is configured to store data. The storage component may include multiple groups of storage units 393. Each group of the storage unit is connected with the artificial intelligence chip via the bus. It is understandable that each group of the storage unit may be a double data rate Synchronous Dynamic random access memory (DDR SDRAM).

The DDR may increase a speed of SDRAM by multiple times without increasing a clock frequency, and the DDR allows data to be read at a rising edge and a falling edge of a clock pulse. The speed of DDR is twice as fast as that of standard SDRAM. In an example, the storage apparatus may include four groups of the storage units. Each group of the storage unit may include multiple DDR4 particles (chips). In an embodiment, the artificial intelligence chip may include four 72-bit DDR4 controllers. In the 72-bit DDDR4 controllers, 64-bit is used for data transmission and 8-bit is used for ECC verification. It is understandable that a theoretical bandwidth of data transmission may reach 25600MB/s when DDR4-3200 particles are used in each group of the storage units.

In an embodiment, each group of the storage units may include multiple DDR SDRAMs which are set in parallel. The DDR may transmit data twice in a clock cycle. A controller for controlling DDR is set in the chip for controlling data transmission and data storage of each storage unit.

The interface apparatus is electrically connected with the artificial intelligence chip. The interface apparatus is configured to realize data transmission between the artificial intelligence chip and an external device (such as a server or a computer). For example, in an embodiment, the interface apparatus may be a standard PCIe (peripheral component interface express) interface. For example, data to be processed is transmitted to the chip by the server through the standard PCIe interface to realize data transmission. In some embodiments, when a PCIe 3.0 X 16 interface is used for transmission, the theoretical bandwidth may reach 16000 MB/s. In another embodiment, the interface apparatus may be other interfaces, and the present invention is not intended to limit specific representations of other interfaces, as long as the interface unit may realize transfer function. In addition, a computation result of the artificial intelligence chip is still transmitted back to the external device (such as the server) by the interface apparatus.

The control component is electrically connected with the artificial intelligence chip. The control component is configured to monitor the state of the artificial intelligence chip. Specifically, the artificial intelligence chip and the control component may be electrically connected through an SPI (serial peripheral interface). The control component may include a micro controller unit (MCU). The artificial intelligence chip may include multiple processing chips, multiple processing cores, or multiple processing circuits, and the artificial intelligence chip may drive multiple loads. Therefore, the artificial intelligence chip may work under different working states such as a multi-load working state and a light-load working state. The control apparatus may be configured to regulate the working states of the multiple processing chips, the multiple processing chips, and/or the multiple processing circuits in the artificial intelligence chip.

In a possible implementation, an electronic device is disclosed, and the electronic device includes the above artificial intelligence chip. The electronic device includes an apparatus for data processing, a robot, a computer, a printer, a scanner, a tablet computer, an intelligent terminal, a mobile phone, a drive recorder, a navigator, a sensor, a webcam, a cloud server, a camera, a video camera, a projector, a watch, an earphone, a mobile storage, a wearable device, a transportation means, a household electrical appliance, and/or a medical device. The transportation means includes an airplane, a ship, and/or a vehicle. The household electrical appliance includes a television, an air conditioner, a microwave oven, a refrigerator, an electric rice cooker, a humidifier, a washing machine, an electric lamp, a gas cooker, and a range hood. The medical device includes a nuclear magnetic resonance spectrometer, a B-ultrasonic scanner, and/or an electrocardiograph.

In the foregoing embodiments, the description of each embodiment has its own emphasis. For the parts that is not described in detail in one embodiment, reference may be made to related descriptions in other embodiments. The technical features of the above-described embodiments may be arbitrarily combined, and all possible combinations of the technical features of the above-described embodiments have not been described to make the description concise.

## Claims

1. A data processing method for image recognition, comprising:

   determining (S11) a source data address, a destination data address, and an extension parameter of data corresponding to a decoded processing instruction, on condition that the decoded processing instruction is a vector extension instruction,
   wherein a first vector data of the source data address includes N data points, where N is an integer greater than 1, and the extension parameter comprises N values, wherein each value $k_n$ represents copying the $n^{th}$ data point for $k_n$ times, wherein $1 \leq n \leq N$, and $k_n \geq 0$;
   obtaining (S12) a second vector data extended by extending the first vector data of the source data address according to the extension parameter; and
   storing (S13) the second vector data to the destination data address, wherein the source data address and the destination data address include consecutive data addresses.

2. The method of claim 1, wherein determining the source data address, the destination data address, and the extension parameter of the data corresponding to the decoded processing instruction, on condition that the decoded processing instruction is the vector extension instruction includes:
   determining source data addresses of a plurality of data points, according to a source data base address and data sizes of the plurality of data points of a first vector data in an operation field of the decoded processing instruction.

3. The method of any one of claims 1 to 2, wherein storing the second vector data to the destination data address includes:
   sequentially storing data points of the second vector data, according to a destination data base address and a data size of the destination data address.

4. The method of any one of claims 1 to 3, further comprising:

   decoding a received processing instruction to obtain the decoded processing instruction, wherein
   the decoded processing instruction includes an operation code, and the operation code is used for indicating a
   performing of a vector extension processing.

5. A data processing apparatus for image recognition, comprising:

   an address determining unit (31) configured to determine a source data address, a destination data address, and
   an extension parameter of data corresponding to a decoded processing instruction, on condition that the decoded
   processing instruction is a vector extension instruction,
   wherein a first vector data of the source data address includes N data points, where N is an integer greater than 1,
   and the extension parameter comprises N values, wherein each value $k_n$ represents copying the $n^{th}$ data point for
   $k_n$ times, wherein $1 \leq n \leq N$, and $k_n \geq 0$;
   a data extending unit (32) configured to obtain a second vector data extended by extending the first vector data of
   the source data address according to the extension parameter; and
   a data storing unit (33) configured to store the second vector data to the destination data address, wherein the
   source data address and the destination data address include consecutive data addresses.

6. The apparatus of claim 5, wherein the address determining unit includes:
   a source address determining sub-unit configured to determine source data addresses of a plurality of data points
   according to a source data base address and data sizes of the plurality of data points of the first vector data in an
   operation field of the decoded processing instruction.

7. The apparatus of any one of claims 5 to 6, wherein the data storing unit includes:
   a storing sub-unit configured to store data points of the second vector data sequentially according to a destination data
   base address and a data size of the destination data address.

8. The apparatus of any one of claims 5 to 7, further comprising:

   a decoding unit configured to obtain the decoded processing instruction by decoding a received processing
   instruction, wherein
   the decoded processing instruction includes an operation code, and the operation code is used for indicating a
   performing of a vector extension processing.

9. An artificial intelligence chip, wherein the chip includes the apparatus for data processing of any one of claims 5-8.

10. An electronic device, wherein the electronic device includes the artificial intelligence chip of claim 9.

11. A board card, wherein the board card comprises:

    a storage component, an interface apparatus, a control component, and the artificial intelligence chip of claim 9,
    wherein
    the artificial intelligence chip is connected with the storage component, the control component, and the interface
    apparatus respectively;
    the storage component is configured to store data;
    the interface apparatus is configured to realize data transmission between the artificial intelligence chip and an
    external device; and
    the control component is configured to monitor a state of the artificial intelligence chip.

**Patentansprüche**

1. Datenverarbeitungsverfahren zur Bilderkennung, umfassend:

   Bestimmen (S11) einer Quelldatenadresse, einer Zieldatenadresse und eines Erweiterungsparameters von
   Daten, die einer decodierten Verarbeitungsanweisung entsprechen, unter Bedingung, dass die decodierte
   Verarbeitungsanweisung eine Vektorerweiterungsanweisung ist,

wobei erste Vektordaten der Quelldatenadresse N Datenpunkte beinhalten, wobei N eine ganze Zahl größer als 1 ist und der Erweiterungsparameter N Werte umfasst, wobei jeder Wert $k_n$ Kopieren des n-ten Datenpunktes für $k_n$ Mal darstellt, wobei $1 \leq n \leq N$ und $k_n \geq 0$;

Erhalten (S12) von zweiten Vektordaten, die durch Erweitern der ersten Vektordaten der Quelldatenadresse gemäß dem Erweiterungsparameter erweitert sind; und

Speichern (S13) der zweiten Vektordaten an der Zieldatenadresse, wobei die Quelldatenadresse und die Zieldatenadresse aufeinanderfolgende Datenadressen beinhalten.

2. Verfahren nach Anspruch 1, wobei das Bestimmen der Quelldatenadresse, der Zieldatenadresse und des Erweiterungsparameters der Daten, die der decodierten Verarbeitungsanweisung entsprechen, unter Bedingung, dass die decodierte Verarbeitungsanweisung die Vektorerweiterungsanweisung ist, Folgendes beinhaltet:

Bestimmen von Quelldatenadressen einer Vielzahl von Datenpunkten gemäß einer Quelldatenbasisadresse und Datengrößen der Vielzahl von Datenpunkten von ersten Vektordaten in einem Operationsfeld der decodierten Verarbeitungsanweisung.

3. Verfahren nach einem der Ansprüche 1 bis 2, wobei das Speichern der zweiten Vektordaten an der Zieldatenadresse Folgendes beinhaltet:

sequentielles Speichern von Datenpunkten der zweiten Vektordaten gemäß einer Zieldatenbasisadresse und einer Datengröße der Zieldatenadresse.

4. Verfahren nach einem der Ansprüche 1 bis 3, ferner umfassend:

Decodieren einer empfangenen Verarbeitungsanweisung, um die decodierte Verarbeitungsanweisung zu erhalten, wobei

die decodierte Verarbeitungsanweisung einen Operationscode beinhaltet und der Operationscode verwendet wird, um ein Durchführen einer Vektorerweiterungsverarbeitung anzugeben.

5. Datenverarbeitungsvorrichtung zur Bilderkennung, umfassend:

eine Adressbestimmungseinheit (31), die konfiguriert ist, um eine Quelldatenadresse, eine Zieldatenadresse und einen Erweiterungsparameter von Daten zu bestimmen, die einer decodierten Verarbeitungsanweisung entsprechen, unter Bedingung, dass die decodierte Verarbeitungsanweisung eine Vektorerweiterungsanweisung ist,

wobei erste Vektordaten der Quelldatenadresse N Datenpunkte beinhalten, wobei N eine ganze Zahl größer als 1 ist und der Erweiterungsparameter N Werte umfasst, wobei jeder Wert $k_n$ Kopieren des n-ten Datenpunktes für $k_n$ Mal darstellt, wobei $1 \leq n \leq N$ und $k_n \geq 0$;

eine Datenerweiterungseinheit (32), die konfiguriert ist, um zweite Vektordaten zu erhalten, die durch Erweitern der ersten Vektordaten der Quelldatenadresse gemäß dem Erweiterungsparameter erweitert sind; und

eine Datenspeichereinheit (33), die konfiguriert ist, um die zweiten Vektordaten an der Zieldatenadresse zu speichern, wobei die Quelldatenadresse und die Zieldatenadresse aufeinanderfolgende Datenadressen beinhalten.

6. Vorrichtung nach Anspruch 5, wobei die Adressbestimmungseinheit Folgendes beinhaltet:

eine Quelladressbestimmungsuntereinheit, die konfiguriert ist, um Quelldatenadressen einer Vielzahl von Datenpunkten gemäß einer Quelldatenbasisadresse und Datengrößen der Vielzahl von Datenpunkten der ersten Vektordaten in einem Operationsfeld der decodierten Verarbeitungsanweisung zu bestimmen.

7. Vorrichtung nach einem der Ansprüche 5 bis 6, wobei die Datenspeichereinheit Folgendes beinhaltet:

eine Speicheruntereinheit, die konfiguriert ist, um Datenpunkte der zweiten Vektordaten gemäß einer Zieldatenbasisadresse und einer Datengröße der Zieldatenadresse sequentiell zu speichern.

8. Vorrichtung nach einem der Ansprüche 5 bis 7, ferner umfassend:

eine Decodiereinheit, die konfiguriert ist, um die decodierte Verarbeitungsanweisung durch Decodieren einer empfangenen Verarbeitungsanweisung zu erhalten, wobei

die decodierte Verarbeitungsanweisung einen Operationscode beinhaltet und der Operationscode verwendet wird, um ein Durchführen einer Vektorerweiterungsverarbeitung anzugeben.

9. Chip mit künstlicher Intelligenz, wobei der Chip die Vorrichtung zur Datenverarbeitung nach einem der Ansprüche 5-8 beinhaltet.

10. Elektronische Einrichtung, wobei die elektronische Einrichtung den Chip mit künstlicher Intelligenz nach Anspruch 9 beinhaltet.

11. Steckkarte, wobei die Steckkarte Folgendes umfasst:

eine Speicherkomponente, eine Schnittstellenvorrichtung, eine Steuerkomponente und den Chip mit künstlicher Intelligenz nach Anspruch 9, wobei
der Chip mit künstlicher Intelligenz jeweils mit der Speicherkomponente, der Steuerkomponente und der Schnittstellenvorrichtung verbunden ist;
die Speicherkomponente konfiguriert ist, um Daten zu speichern;
die Schnittstellenvorrichtung konfiguriert ist, um Datenübertragung zwischen dem Chip mit künstlicher Intelligenz und einer externen Einrichtung zu implementieren; und
die Steuerkomponente konfiguriert ist, um einen Zustand des Chips mit künstlicher Intelligenz zu überwachen.


**Revendications**

1. Procédé de traitement de données pour une reconnaissance d'image, comprenant :

la détermination (S11) d'une adresse de données source, d'une adresse de données de destination et d'un paramètre d'extension de données correspondant à une instruction de traitement décodée, à condition que l'instruction de traitement décodée soit une instruction d'extension de vecteur,
des premières données vectorielles de l'adresse de données source comprenant N points de données, où N est un nombre entier supérieur à 1, et ledit paramètre d'extension comprenant N valeurs, chaque valeur $k_n$ représentant la copie du $n^{ième}$ point de données pour $k_n$ fois, où $1 \leq n \leq N$, et $k_n \geq 0$ ;
l'obtention (S12) de secondes données vectorielles étendues en étendant les premières données vectorielles de l'adresse de données source selon le paramètre d'extension ; et
le stockage (S13) des secondes données vectorielles à l'adresse de données de destination, ladite adresse de données source et ladite adresse de données de destination comprenant des adresses de données consécutives.

2. Procédé de la revendication 1, ladite détermination de l'adresse de données source, de l'adresse de données de destination et du paramètre d'extension des données correspondant à l'instruction de traitement décodée, à condition que l'instruction de traitement décodée soit l'instruction d'extension de vecteur, comprenant :
la détermination d'adresses de données source d'une pluralité de points de données, selon une adresse de base de données source et des tailles de données de la pluralité de points de données de premières données de vecteur dans un champ d'opération de l'instruction de traitement décodée.

3. Procédé de l'une quelconque des revendications 1 à 2, ledit stockage des secondes données vectorielles à l'adresse de données de destination comprenant :
le stockage séquentiel de points de données des secondes données vectorielles, selon une adresse de base de données de destination et une taille de données de l'adresse de données de destination.

4. Procédé de l'une quelconque des revendications 1 à 3, comprenant en outre :

le décodage d'une instruction de traitement reçue pour obtenir l'instruction de traitement décodée,
ladite instruction de traitement décodée comprenant un code d'opération, et ledit code d'opération étant utilisé pour indiquer la réalisation d'un traitement d'extension de vecteur.

5. Appareil de traitement de données pour une reconnaissance d'image, comprenant :

une unité de détermination d'adresse (31) configurée pour déterminer une adresse de données source, une adresse de données de destination et un paramètre d'extension de données correspondant à une instruction de traitement décodée, à condition que l'instruction de traitement décodée soit une instruction d'extension de vecteur,

des premières données vectorielles de l'adresse de données source comprenant N points de données, où N est un nombre entier supérieur à 1, et ledit paramètre d'extension comprenant N valeurs, chaque valeur $k_n$ représentant la copie du $n^{ième}$ point de données pour $k_n$ fois, où $1 \leq n \leq N$, et $k_n \geq 0$ ;

une unité d'extension de données (32) configurée pour obtenir des secondes données vectorielles étendues en étendant les premières données vectorielles de l'adresse de données source selon le paramètre d'extension ; et

une unité de stockage de données (33) configurée pour stocker les secondes données vectorielles à l'adresse de données de destination, ladite adresse de données source et ladite adresse de données de destination comprenant des adresses de données consécutives.

6. Appareil de la revendication 5, ladite unité de détermination d'adresse comprenant :
une sous-unité de détermination d'adresse source configurée pour déterminer des adresses de données source d'une pluralité de points de données selon une adresse de base de données source et des tailles de données de la pluralité de points de données des premières données vectorielles dans un champ d'opération de l'instruction de traitement décodée.

7. Appareil de l'une quelconque des revendications 5 à 6, ladite unité de stockage de données comprenant :
une sous-unité de stockage configurée pour stocker séquentiellement des points de données des secondes données vectorielles selon une adresse de base de données de destination et une taille de données de l'adresse de données de destination.

8. Appareil de l'une quelconque des revendications 5 à 7, comprenant en outre :

une unité de décodage configurée pour obtenir l'instruction de traitement décodée en décodant une instruction de traitement reçue,

ladite instruction de traitement décodée comprenant un code d'opération, et ledit code d'opération étant utilisé pour indiquer la réalisation d'un traitement d'extension de vecteur.

9. Puce d'intelligence artificielle, ladite puce comprenant l'appareil pour le traitement de données de l'une quelconque des revendications 5 à 8.

10. Dispositif électronique, ledit dispositif électronique comprenant la puce d'intelligence artificielle de la revendication 9.

11. Carte de circuit, ladite carte de circuit comprenant :

un composant de stockage, un appareil d'interface, un composant de commande et la puce d'intelligence artificielle de la revendication 9,

ladite puce d'intelligence artificielle étant connectée respectivement au composant de stockage, au composant de commande et à l'appareil d'interface ;

ledit composant de stockage étant configuré pour stocker des données ;

ledit appareil d'interface étant configuré pour réaliser une transmission de données entre la puce d'intelligence artificielle et un dispositif externe ; et

ledit composant de commande étant configuré pour surveiller un état de la puce d'intelligence artificielle.

Processor100

Processing unit
101

Processing unit
101

Processing unit
101

Storage unit102

FIG. 1

Determine a source data address, a destination data address, and an extension parameter of data corresponding to the processing instruction on condition that a decoded processing instruction is a vector extension instruction ⌒ S11

Extend first vector data at the source data address according to the extension parameter to obtain the extended second vector data ⌒ S12

Store the second vector data to the destination data address ⌒ S13

FIG. 2

— 31

Address determining unit

— 32

Data extending unit

— 33

Data storing unit

FIG. 3

Board card

Storage component 390

| Storage unit393 | • • • | Storage unit393 |

Bus

Control component 392

MCU

Chip389

Chip389

Interface apparatus 391

External device

FIG. 4

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010383677
- EP 3336692 A1
- EP 2584460 A1